(19) Europäisches Patentamt
European Patent Office
Office européen des brevets

(11) Publication number: **0 147 438**
**B1**

(12) **EUROPEAN PATENT SPECIFICATION**

(45) Date of publication of patent specification: **08.02.89**

(51) Int. Cl.⁴: **C 10 L 1/22**, C 10 M 133/08

(21) Application number: **84902302.3**

(22) Date of filing: **29.05.84**

(86) International application number:
**PCT/US84/00810**

(87) International publication number:
**WO 84/04754 06.12.84 Gazette 84/28**

# (54) METHYLOL POLYETHER AMINO ETHANES IN FUEL AND LUBRICANT COMPOSITIONS.

(30) Priority: **31.05.83 US 499131**
**31.05.83 US 499132**

(43) Date of publication of application:
**10.07.85 Bulletin 85/28**

(45) Publication of the grant of the patent:
**08.02.89 Bulletin 89/06**

(84) Designated Contracting States:
**DE FR GB**

(56) References cited:
FR-A-2 310 342
US-A-3 437 693
US-A-3 456 013
US-A-3 637 358
US-A-3 849 083
US-A-3 960 965
US-A-4 168 242
US-A-4 170 560
US-A-4 252 746
US-A-4 261 704
US-A-4 332 595

(73) Proprietor: **CHEVRON RESEARCH COMPANY**
**P.O. Box 7643**
**San Francisco, CA 94120 (US)**

(72) Inventor: **CAMPBELL, Curtis, B.**
**826 Coral Ridge Circle**
**Rodeo, CA 94572 (US)**

(74) Representative: **Kosmin, Gerald Emmanuel et al**
**HASELTINE, LAKE & CO. Hazlitt House 28**
**Southampton Buildings Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 147 438 B1

## Description

This invention is directed to methylol polyether amino ethanes, to fuel compositions and lubricating oil compositions containing these compounds and to their use as either fuel additives or detergent or dispercancy additives in lubricating oils.

Numerous deposit-forming substances are inherent in hydrocarbon fuels. These substances when used in internal combustion engines tend to form deposits on and around constricted areas of the engine contacted by the fuel. Typical areas commonly and sometimes seriously burdened by the formation of deposits include carburetor ports, the throttle body and venturies, engine intake valves, combustion chamber, etc.

Deposits adversely affect the operation of the vehicle. For example, deposits on the carburetor throttle body and venturies increase the fuel-to-air ratio of the gas mixture to the combustion chamber thereby increasing the amount of unburned hydrocarbon and carbon monoxide discharged from the chamber. The high fuel-air ratio also reduces the gas mileage obtainable from the vehicle.

Deposits on the engine intake valves when they get sufficiently heavy, on the other hand, restrict the gas mixture flow into the combustion chamber. This restriction, starves the engine of air and fuel and results in a loss of power. Deposits on the valves also increase the probability of valve failure due to burning and improper valve seating. In addition, these deposits may break off and enter the combustion chamber possibly resulting in mechanical damage to the piston, piston rings, engine head, etc.

The formation of these deposits can be inhibited as well as removed by incorporating an active detergent and/or dispersant into the fuel. These detergents/dispersants function to cleanse these deposit-prone areas of the harmful deposits, thereby enhancing engine performance and longevity. There are numerous detergent-type gasoline additives currently available which, to varying degrees, perform these functions.

A complicating factor has, however, recently arisen. With the advent of automobile engines that require the use of nonleaded gasolines (to prevent disablement of catalytic converters used to reduce emissions), it has been found difficult to provide gasoline of high enough octane to prevent knocking and the concomitant damge which it causes. The chief problem lies in the area of the degree of octane requirement increase, herein called "ORI", which is caused by deposits formed in the commercial gasoline.

The basis of the ORI problem is as follows: each engine, when new, requires a certain minimum octane fuel in order to operate satisfactorily without pinging and/or knocking. As the engine is operated on any gasoline, this minimum octane increases and, in most cases, if the engine is operated in the same fuel for a prolonged period, will reach an equilibrium. This is apparently caused by an amount of deposits in the combustion chamber. Equilibrium is typically reached after 5000 (8,045 km) to 15,000 (24,135 km) miles of automobile operation.

The octane requirement increase in particular engines used with commercial gasolines will vary at equilibrium from 5 or 6 octane units to as high as 12 or 15 units, depending upon the gasoline compositions, engine design and type of operation. The seriousness of the problem is thus apparent. A typical automobile with a research octane requirement of 85, when new, may after a few months of operation require 97 research octane gasoline for proper operation, and little unleaded gasoline of that octane is available. The ORI problem also exists in some degree with engines operated on leaded fuels. US.—A—3,144,311, US—A—3,146,203 and US—A—4,247,301 disclose lead-containing fuel compositions having reduced ORI properties.

The ORI problem is compounded by the fact that the most common method for increasing the octane rating of unleaded gasoline is to increase its aromatic content. This, however, eventually increases even more the necessary octane requirement. Moreover, some presently used nitrogen-containing compounds used as deposit-control additives and their mineral oil or polymer carriers may also significantly contribute to ORI in engines using unleaded fuels.

It is, therefore, particularly desirable to provide deposit control additives which effectively control the deposits in intake systems of engines, without themselves eventually contributing to the problem. The present invention discloses hydrocarbyl methylol poly(oxyalkylene) amino ethanes which seek to do exactly that.

A prior class of deposit control additives generally including polyether amines includes U.S.—A—3,864,098 disclosing N-hydrocarbyl-N-heterocyclic polyamines displaying detergency in fuel concentration of 10 to 4,000 ppm. U.S.—A—4,247,301 teaches hydrocarbyl polyoxyalkylene polyamines as deposit control agents in fuels and dispersants in lubricating oils. U.S.—A—4,160,648 discloses deposit control additives, fuels containing them and lubricating oils having them as dispersant agents comprised of polyoxyalkylene carbamates.

Our EP—A—0100665 discloses polyether polyamine ethanes generally, as deposit control additives and fuel compositions containing them.

Likewise, the present invention also relates to lubricating oil compositions containing hydrocarbyl methylol poly(oxyalkylene) amino ethanes which contribute dispersancy and detergency to the compositions.

Lubricating oil compositions, particularly for use in internal combustion engines, have long performed many functions other than simply lubricating moving parts. Modern-day, highly compounded lubricating

oil compositions provide anti-wear, anti-oxidant, extreme-pressure and anti-rust protection in addition to maintaining the cleanliness of the engine by detergency and dispersancy. Many lubricating oil additives are well known for accomplishing these functions. For maintaining engine cleanliness, a well-known class of ashless detergents which have been found to be particularly useful are polyoxyalkylene carbamates. U.S.—A—4,160,648 and US—A—4,247,301 disclose and claim fuel compositions containing certain poly(oxyalkylene) aminocarbamates and polyoxyalkylene polyamines as deposit control additives. While, in general, deposit control additives are not believed to be useful dispersants for lubricating oil compositions generally, certain aminocarbamates and certain polyether amines are useful in this regard. U.S.—A—4,438,022 discloses polyether polyamine ethanes as lubricating oil dispersants.

In accordance with one aspect of the present invention, there are provided deposit control additives for liquid hydrocarbon fuels or lubricating oil compositions, said additives being hydrocarbyl methylol polyoxyalkylene amino ethanes of molecualr weight from 300 to 2500; wherein said hydrocarbyl group contains from 5 to 30 carbon atoms, said polyoxyalkylene moiety comprises from 1 to 30 oxyalkylene units selected from oxyalkylene units having from 2 to 4 carbon atoms, said ethane moiety contains from 2 to 8 carbon atoms and said amine moiety comprises from 1 to 12 amine nitrogen atoms and from 2 to 40 carbon atoms.

According to another aspect of the invention, there is provided a concentrate comprising an inert stable oleophilic organic solvent boiling in the range from 150 to 400°F (66.5 to 204°C) and from 10 to 50 weight percent of a deposit control additive in accordance with the invention.

According to a further aspect of the invention, there is provided a fuel composition comprising a hydrocarbon fuel boiling in the gasoline range and from 30 to 10,000 ppm of a deposit control additive in accordance with the invention.

According to a still further aspect of the invention, there is provided a lubricating oil composition comprising an oil of lubricating viscosity and from 0.01 to 10 weight percent of the total composition of a deposit control additive in accordance with the invention.

The additives of the invention, when added to fuels or used as fuel concentrates, are effective in maintaining the cleanliness of engine intake systems. The additives consist of certain fuel soluble hydrocarbyl-terminated methylol polyoxyalkylene amino ethanes soluble in hydrocarbon fuel boiling in the gasoline range. The polyoxyalkylene moiety comprises at least one oxyalkylene unit of 2 to 4 carbon atoms. The methylol or hydroxymethyl group ($—CH_2OH$) is bonded to a carbon atom of the hydrocarbyl termination or "cap" which is in turn bonded to the terminal oxygen of the polyoxyalkylene or a polyoxyalkylene block copolymer chain. The polyoxyalkylene chain is bonded through a terminal oxygen to an ethane or substituted ethane chain or connecting group which is in turn bonded to an amino nitrogen atom. Preferably the ethane group is bonded to a polyamine having from 2 to 12 amine nitrogens and 2 to 40 carbon atoms with a carbon to nitrogen ratio of between 1:1 and 10:1. The hydrocarbyl-terminating group contains from 5 to 30, preferably 5 to 20, carbon atoms and is bonded to the polyoxyalkylene units through an ether oxygen atom.

The hydrocarbyl methylol polyoxyalkylene amino ethane additive consists of three parts or moieties. The first is the amine moiety, the second is the hydrocarbyl-terminated methylol poly(oxyalkylene) moiety which is bonded through the third moiety, an ethane connecting group or linkage, to a nitrogen atom of the amine.

As fuel additives, the hydroxy-terminated methylol polyoxyalkylene moiety, and the amine moiety, are selected to provide both solubility in the fuel composition and deposit control activity without contributing to octane requirement increase (ORI). As lubricating oil additives, the moieties may be selected to provide solubility in lubricating oil compositions with dispersant activity without contributing to deposit formation. The preferred nomenclature of the additive generally is 1-(1′-methylol hydrocarbyl)polyoxyalkylene-2-amino ethane, but for convenience it will be referred to as methylol polyether amino ethanes.

The additives may be prepared from the reaction of a suitable halogenating agent containing the desired ethane moiety, such as ethylene chlorohydrin, with the appropriate substitute epoxide, polymerizing to the polyoxyalkylene chain. This in turn reacted with a longer chain epoxide containing the appropriate hydrocarbyl cap, which is followed by reaction of the capped polyether chloride with the appropriate polyamine to form the active composition. The initial epoxide reaction is carried out at relatively low temperatures, i.e., 0°C and under; while the second epoxide reaction is carried out at higher temperatures relative to the first, e.g., 20°C to 80°C.

Poly(oxyalkylene) component

The polyoxyalkylene moiety is ordinarily prepared by the reaction of an appropriate epoxide with an appropriate chlorohydrin containing the desired ethane connecting group. In the prefered embodiment ethylene chlorohydrin is used, which is reacted under polymerization conditions with the lower alkylene oxides or oxiranes containing from 2 to 4 carbon atoms, such as ethylene oxide, propylene oxide or butylene oxide. The resulting poly(oxyalkylene) polymer contains at least one oxyalkylene unit, preferably 1 to 30 units, more preferably 5 to 30 units and most preferably 10 to about 25 oxyalkylene units.

In the polymerization reaction, a single type of alkylene oxide may be employed. Copolymers, however, are equally satisfactory and random copolymers are readily prepared by contacting the ethylene chlorohydrin compound with a mixture of alkylene oxides. Blocked copolymers of oxyalkylene units also

provide satisfactory polyoxyalkylene polymers for the practice of the present invention. Blocked copolymers are prepared by reacting the chlorohydrin with first one alkylene oxide and then the other in any order, or repetitively, under polymerization conditions

The reaction is promoted or "catalyzed" by the use of an appropriate Lewis acid or protic acid catalyst, examples of which include boron trifluoride:diethyletherate ($BF_3OEt_2$), aluminum trichloride ($AlCl_3$); para-toluene sulfonic acid, and trifluoromethane sulfonic acid. This initial reaction is carried out at relatively low temperatures, i.e., from about −60°C to about 0°C and allowed to warm slowly to room temperature after 80% to 99% of the epoxide has reacted, approximately two hours to eight days.

1-Methylol hydrocarbyl cap

The polyoxyalkylene moiety is capped with a 1-methylol hydrocarbyl group. This is accomplished by warming the polyoxyalkylene moiety in the presence of the catalyst to between 20°C to 80°C and adding an epoxide containing the desired hydrocarbyl group. The hydrocarbyl group includes branched or straight chain 5 to 30 carbon alkyl groups optionally substituted with hetero atoms, including hydroxyl, amino, or halo groups. These epoxides may have the epoxide ring at one end of the molecule or at some intermediate point in the alkyl group.

The 1-methylol hydrocarbyl cap may include a short polyoxyalkylene group having from 0 to 4, more preferably 0 to 1 oxyalkylene unit terminating with the 1-methylol hydrocarbyl group. The oxyalkylen units contain from 5 to about 30 carbon atoms.

The terminal oxygen atom in the polyoxyalkylene chain is bound to the ethane or substituted ethane connecting group, which is in turn bound to a nitrogen atom of the amine or polyamine.

In general, the poly(oxyalkylene) compounds are mixtures of compounds that differ in polymer chain length. However, their properties closely approximate those of a polymer represented by the average composition and molecular weight.

Ethane moiety

The ethane connecting group ordinarily consists of a 2-carbon chain, or a 2-carbon chain with branched units extending from these carbons atoms. The branches of the connecting group consist of low molecular weight alkyl groups of up to 5 carbon atoms. Additionally, in the present invention, when the ethane connecting group contains branched alkyl groups, the branched groups will not contain the same number of carbon atoms as those extending from the oxyalkylene units of the polyoxyalkylene moiety.

Amine component or moiety

The amine moiety of the polyether amino ethane is preferably derived from ammonia or, more preferably, from a polyamine having from about 2 to about 12 amine nitrogen atoms and from about 2 to about 10 carbon atoms. The polyamine preferably has a carbon to nitrogen ratio of from about 1:1 to about 10:1. The polyamine will contain at least 1 primary or secondary amine nitrogen atom. The polyamine may be substituted with a substituent group selected from (A) hydrogen; (B) hydrocarbyl groups from about 1 to about 10 carbon atoms; (C) acyl groups from about 2 to about 10 carbon atoms; and (D) monoketo, monohydroxy, monocyano, lower alkyl and lower alkoxy derivatives of (B), (C). "Lower", as used in lower alkyl and lower alkoxy, means a group containing about 1 to 6 carbon atoms. "Hydrocarbyl" denotes an organic radical composed of carbon and hydrogen which may be aliphatic, alicyclic, aromatic or combinations thereof, e.g. aralkyl. Preferably, the hydrocarbyl group will be free of aliphatic unsaturation, i.e., ethylenic and acetylenic, particularly acetylenic unsaturation. The substituted polyamines of the present invention are generally, but not necessarily, N-substituted polyamines. The acyl groups falling within the definition of the aforementioned (C) substituents are such as propionyl, acetyl, etc. The more preferred substituents are hydrogen, $C_1$ to $C_6$ alkyls, and $C_1$—$C_6$ hydroxyalkyls.

The more preferred polyamines finding use within the scope of the present invention are polyalkylene polyamines, including alkylene diamine and including substituted polyamines, e.g. alkyl and hydroxyalkyl substituted polyalkylene polyamines. Preferably the alkylene groups contain from 2 to 6 carbon atoms, there being preferably from 2 to 3 carbon atoms between the nitrogen atoms. Such groups are exemplified by ethylene amines and include ethylene diamine, diethylene triamine, di(trimethylene) triamine, dipropylenetriamine, triethylenetetramine, etc. Such amines encompass isomers which are the branched-chain polyamines and the previously mentioned substituted polyamines, including hydroxy and hydrocarbyl-substituted polyamines. Among the polyalkylene polyamines, those containing 2 to 12 amine nitrogen atoms and 2 to 24 carbon atoms, are especially preferred and the $C_2$ to $C_3$ alkylene polyamines are most preferred, in particular, the lower polyalkylene polyamines, e.g. ethylene diamine, tetraethylenepentamine, etc.

In many instances a single compound will not be used as reactant in the preparation of the compositions of this invention, in particular the polyamine component. That is, mixtures will be used in which one or two compounds will predominate with the average composition indicated.

Compositions

The compositions comprising the present invention are prepaed by the reaction of the hydrocarbyl terminated methylol polyoxyalkylene halo ethane moiety, with ammonia or with the appropriately selected

polyamine. The basic substitution reaction yields the attachment of the amine or polyamine to the polyoxyalkylene and the elimination of hydrogen halide.

The class of preferred methylol polyether amino ethanes may be described by the following formula:

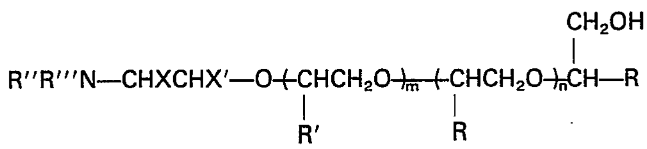

where R=a 5 to 30 carbon aliphatic, olefinic or alkylaryl group, which may be branched or straight chain and which may be substituted with hetero substituents selected from hydroxyl, amine, or halo groups;

where R′=hydrogen, $CH_3$—$C_2H_5$—;

where R″ and R‴ independently=hydrogen or

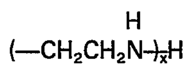

wherein x=0 to 5;

where x and x′ independently=H, or alkyl groups of up to 5 carbons, and are different from R′.

where m=1 to 30 oxyalkylene units; and

where n=0 to 4 oxyalkylene units.

The proper concentration of the additive necessary in order to achieve the desired deposit control effect or carburetor detergency is dependent upon a variety of factors including the type of fuel used, the presence of other detergents or dispersants or other additives, etc. Generally, however, and in the preferred embodiment, the range of concentration of the additive in the base fuel is 30 to 10,000 weight parts per million, preferably from 30 to 2,000 weight parts per million, and most preferably from 100 to 700 parts per million of polyether polyamine ethane per part of base fuel. If other detergents are present, a lesser amount of polyether amino ethane may be used.

The oils which find use in this invention are oils of lubricating viscosity derived from petroleum or synthetic sources. Oils of lubricating viscosity normally have viscosities in the range of 35 to 50,000 Saybolt Universal Seconds (SUS) at 100°F (37.8°C) and more usually from about 50 to 10,000 SUS at 100°F (37.8°). Examples of such base oils are naphthenic bases, paraffin base and mixed base mineral oils, synthetic oils, for example, alkylene polymers, such as the polymers or propylene, butylene, etc. and mixtures thereof.

Usually included in the oils besides the subject additive are such additives as dispersants/detergents, rust inhibitors, antioxidants, oiliness agents, foam inhibitors, viscosity index improvers, pour point depressants, etc. Usually, these other additives will be present in amounts of from about 0.5 to 15 weight percent of the total composition. Generally, each of the additives will be present in the range from about 0.01 to 5 weight percent of the total composition.

It is also contemplated that the methylol polyether amino ethanes may be used as concentrates, and could be used as additives to fuels or lubricating oils subsequent to their preparation. In concentrates, the weight percent of these additives will usually range from about 0.3 to 50 weight percent. The concentrate would ordinarily comprise an inert stable oleophilic organic solvent and the carrier of said solvent boiling in the range of from about 150 (65.5°C) to 400°F (204.4°C) and the concentrate would preferably contain from about 10 to 50 weight percent of the methylol polyether amino ethane compound.

The following Examples illustrate various aspects of the invention.

Example 1

Twelve grams (0.15 mole) chloroethanol was added to 200 ml $CH_2Cl_2$ in a 2-liter, round-bottom flask, equipped with a magnetic stirrer, a thermometer, an addition funnel, and a $N_2$ atmosphere. The mixture was cooled in an ice-salt bath to approximately 0°C. After about 10 minutes, 4.0 grams (0.03 mole) boron trifluoride: diethyletherate ($BF_3OEt_2$) was quickly added with stirring. 184 Grams (2.55 mole) butylene oxide was then added slowly, over approximately two and one-half hours, while keeping the temperatures below 10°C. The reaction was continuously stirred and the amount of butylene oxide remaining was monitored by gas chromatograph until less than 1% remained—approximately two and one-half hours.

The temperature was then increased to approximately 30°C, and 45 grams (0.19 mole) of $C_{16}$ alpha olefin epoxide (hexadecenyl epoxide) was added rapidly to the above product. The mixture was stirred for one and one-half hours at reflux temperature, cooled to room temperature, quenched with 50 ml of methanol and the reaction placed in a separation funnel. The mixture was then extracted first with 50 ml water and then 50 ml saturated $NaHCO_3$ solution. The mixture was then washed three times with $H_2O$. The product was dried over $MgSO_4$, filtered, and stripped, yielding 188 grams of a clear oil: Hydroxyl Number=40; Cl=2.15%.

170.08 grams (0.19 mole) of the above product was placed in a 2-liter, round-bottom flask, equipped with a magnetic stirrer, a thermometer, and a $N_2$ atmosphere. 881 grams (14.7 mole) of ethylene diamine

was added to the flask. The temperature was increased to 80°C. The progress of the reaction was monitored by thin layer chromatography and permitted to react for approximately seven days, then diluted with ether and washed with water. The product was dried over $K_2CO_3$, filtered and stripped, yielding 155 grams of product. Total Nitrogen=1.50%; Basic Nitrogen=1.49%.

Example 2

The same procedure as detailed in Example 1 was followed except that 95 grams (0.4 mole) of $C_{16}$ alpha olefin epoxide (hexadecenyl epoxide) was added following the reaction of all of the butylene oxide. 242 grams of the final product was yielded: Basic Nitrogen=1.23%.

Example 3

Thirty-six grams (0.45 mole) chloroethanol was added to 600 ml $CH_2Cl_2$ in a 2-liter, round-bottom flask, equipped with a mechanical stirrer, a thermometer, an addition funnel and a $N_2$ atmosphere. The mixture was cooled in a dry ice/acetone bath to approximately −30°C and 10.9 grams (0.08 mole) boron trifluoride:diethyletherate was quickly added with stirring. 536 grams (7.4 mole) of butylene oxide was then added over an 11-hour period.

The reaction was continuously stirred and the amount of butylene oxide remaining was monitored by gas chromatography until less than 1% remained—approximately five days. The temperature was increased to room temperature and stirred for two days. The mixture was extracted first with water and then with saturated $NaHCO_3$ solution. The mixture was then washed three times with water. The product was dried over anhydrous Mg $SO_4$, filtered and stripped to yield 571 grams of a clear oil: Hydroxyl Numb=47; Cl=2.35%.

Twenty-five grams of the above product was added to 30 ml $CH_2Cl_2$ in a 250 ml round-bottom flask, equipped with a magnetic stirrer, a thermometer and a $N_2$ atmosphere. The reaction was cooled to 2°C in an ice/salt bath and 0.5 grams (0.03 mole) of boron trifluoride:diethyletherate was quickly added. After about five minutes, the mixture was heated to 35°C and 6.6 grams (0.03 mole) of $C_{16}$ alpha olefin epoxide (hexadecenyl epoxide) was added in two minutes. The reaction temperature was increased to 45°C and stirred two hours. The mixture was then cooled to room temperature and quenched with methanol. The mixture was then washed with 50 ml water, then 50 ml saturated $NaHCO_3$ solution and finally three times with water. The product was dried over anhydrous $K_2CO_3$, filtered and stripped to give 28 grams of a clear oil: Hydroxyl Number=39; Cl=2.22%.

Following the procedure of Example 1, the above product is then reacted with ethylene diamine to give a compound within the scope of this invention.

In the following tests, the hydrocarbyl methylol polyoxyalkylene amino ethanes were blended in gasoline and their deposit control capacity tested in an ASTM/CFR Single-Cylinder Engine Test. In carrying out the tests, a Waukesha CFR single-cylinder engine is used. The run is carried out for 15 hours, at the end of which time the intake valve is removed, washed with hexane and weighed. The previously determined weight of the clean valve is subtracted from the weight of the valve. The differences between the two weights is the weight of the deposit with a lesser amount of deposit measured connoting a superior additive. The operating conditions of the test are as follows: water jacket temperature 100°C (212°F); manifold vacuum of 12 in Hg, intake mixture temperature of 50.2°C (125°F); air-fuel ratio of 12; ignition spark timing of 40°BTC; engine speed is 1800 rpm; the crankcase oil is a commercial 30W oil. The amount of carbonaceous deposit in milligrams on the intake valves is measured and reported in the following Table 1. The additives measured were those of Example 1 and are shown for various concentrations.

TABLE 1

| Run | Concentration (ppm) | Avg. washed deposit, mg |
|---|---|---|
| 1 | 300 | 0.6 |
| 2 | 200 | 2.0 |
| 3 | 150 | 290.1 |
| 4 (Base) | 0 | 105.5 |

All specific embodiments of the invention have been described in detail. It should be understood that the invention is to be given the broadest possible interpretation within the terms of the following claims.

**Claims**

1. Deposit control additives for liquid hydrocarbon fuels or lubricating oil compositions, said additives being hydrocarbyl methylol polyoxyalkylene amino ethanes of molecular weight from 300 to 2500; wherein

said hydrocarbyl group contains from 5 to 30 carbon atoms, said polyoxyalkylene moiety comprises from 1 to 30 oxyalkylene units selected from oxyalkylene units having from 2 to 4 carbon atoms, said ethane moiety contains from 2 to 8 carbon atoms and said amine moiety comprises from 1 to 12 amine nitrogen atoms and from 2 to 40 carbon atoms.

2. Additives as claimed in Claim 1, wherein said oxyalkylene units are selected from oxyalkylene units having 3 or 4 carbon atoms.

3. Additives as claimed in Claim 1 or 2, wherein said ethane moiety contains from 2 to 4 carbon atoms.

4. Additives as claimed in Claim 1, 2 or 3, wherein the units substituted on the ethane moiety do not contain the same number of carbons as the branches of the oxyalkylene units of the same molecule.

5. Additives as claimed in Claim 1, 2, 3 or 4, wherein the amino moiety is a polyamine.

6. Additives as claimed in any preceding claim, wherein said amino moiety is derived from lower polyalkylene polyamines and contains at least one primary or secondary amine nitrogen atom.

7. Additives as claimed in Claim 6, wherein said lower polyalkylene polyamine is ethylene diamine or diethylene triamine.

8. Additives as claimed in any preceding claim, wherein the additive has a molecular weight in the range from 800 to 1500.

9. Additives as claimed in any preceding claim, wherein said hydrocarbyl group contains from 5 to 20 carbon atoms.

10. A concentrate comprising an inert stable oleophilic organic solvent boiling in the range from 150 to 400°F (65.5 to 204°C) and from 10 to 50 weight percent of an additive as claimed in any one of Claims 1 to 9.

11. A fuel composition comprising a hydrocarbon fuel boiling in the gasoline range and from 30 to 10,000 ppm of an additive as claimed in any one of Claims 1 to 9.

12. A lubricating oil composition comprising an oil of lubricating viscosity and from 0.01 to 10 weight percent of the total composition of an additive as claimed in any one of Claims 1 to 9.

**Patentansprüche**

1. Ablagerungen bekämpfende Additive für flüssige Kohlenwasserstofftreibstoffe oder -schmierölzubereitungen, wobei die Additive Hydrocarbylmethylolpolyoxyalkylenaminoethane mit einem Molekulargewicht von 300 bis 2500 sind, wobei die Kohlenwasserstoffgruppe 5 bis 30 Kohlenstoffatome enthält, der Polyoxyalkylenanteil 1 bis 30 Oxyalkyleneinheiten aufweist, ausgewählt aus aus Oxyalkyleneinheiten mit 2 bis 4 Kohlenstoffatomen, der Ethananteil 2 bis 8 Kohlenstoffatome enthält und der Aminoanteil 1 bis 12 Aminostickstoffatome und 2 bis 40 Kohlenstoffatome aufweist.

2. Additive nach Anspruch 1, worin die Oxyalkyleneinheiten aus Oxyalkyleneinheiten mit 3 oder 4 Kohlenstoffatomen ausgewählt sind.

3. Additive nach Anspruch 1 oder 2, worin der Ethananteil 2 bis 4 Kohlenstoffatome enthält.

4. Additive nach Ansprüche 1, 2 oder 3, worin die Einheiten, die an dem Ethananteil substituiert sind, nicht die gleiche Anzahl Kohlenstoffatome wie die Verzweigungen der Oxyalkyleneinheiten des gleichen Moleküls enthalten.

5. Additive nach Anspruch 1, 2, 3 oder 4, worin der Aminoanteil ein Polyamin ist.

6. Additive nach einem der vorhergehenden Ansprüche, worin der Aminoanteil auf niederere Polyalkylenpolyamine zurückgeht und wenigstens ein primäres oder sekundäres Aminstickstoffatom enthält.

7. Additive nach anspruch 6, worin das niedere Polyalkylenpolyamin aus Ethylendiamin oder Diethylentriamin besteht.

8. Additive nach einem der vorhergehenden Ansprüche, worin das Additiv ein Molekulargewicht im Bereich von 800 bis 1500 besitzt.

9. Additive nach einem der vorhergehenden Ansprüche, worin die Kohlenwasserstoffgruppe 5 bis 20 Kohlenstoffatome enthält.

10. Konzentrat aus einem inerten stabilen oleophilen organischen Lösungsmittel, das im Bereich von 150 bis 400°F (65,5 bis 204°C) siedet, und 10 bis 50 Gew.-% eines Additivs gemäß einem der Ansprüche 1 bis 9 aufweist.

11. Triebstoffzubereitung aus einem Kohlenwasserstofftreibstoff, der im Benzinbereich siedet, und 30 bis 10 000 ppm eines Additivs gemäß einem der Ansprüche 1 bis 9.

12. Schmierörlzubereitung aus einem Öl mit Schmierviskosität und 0,01 bis 10 Gew.-%, bezogen auf die gesamte Zubereitung, eines Additiv gemäß einem der Ansprüche 1 bis 9.

**Revendications**

1. Additifs anti-dépôt destinés à des carburants hydrocarbonés liquides ou des compositions d'huiles lubrifiantes, lesdits additifs étant des hydrocarbylméthylolpolyoxyalkylène-amino-éthanes ayant un poids moléculaire compris dans l'intervalle de 300 à 2500; dans lesquels le groupe hydrocarbyle contient 5 à 30 atomes de carbone, le groupement polyoxyalkylène comprend 1 à 30 motifs oxyalkylène choisis entre des motifs oxyalkylène ayant 2 à 4 atomes de carbone, le groupement éthane contient 2 à 8 atomes de carbone et le groupement amine comprend 1 à 12 atomes d'azote et 2 à 40 atomes de carbone.

2. Additifs suivant la revendication 1, dans lesquels les motifs oxyalkylène soit choisis entre des motifs oxyalkylène ayant 3 ou 4 atomes de carbone.

3. Additifs suivant la revendication 1 ou 2, dans lesquels le groupement éthane contient 2 à 4 atomes de carbone.

4. Additifs suivant la revendication 1, 2 ou 3, dans lesquels les motifs de substitution sur le groupement éthane ne contiennent pas le même nombre d'atomes de carbone que les ramifications des motifs oxyalkylène de la même molécule.

5. Additifs suivant la revendication 1, 2, 3 ou 4, dans lesquels le groupement amino est une polyamine.

6. Additifs suivant l'une quelconque des revendications précédentes, dans lesquels le groupement amino est dérivé de polyalkylène-polyamines inférieures et contient au moins un atome d'azote d'amine primaire ou secondaire.

7. Additifs suivant la revendication 6, dans lesquels la polyalkylène-polyamine inférieure est l'éthylène-diamine ou la diéthylène-triamine.

8. Additifs suivant l'une quelconque des revendications précédentes, dans lesquels l'additif possède un poids moléculaire compris dans l'intervalle de 800 à 1500.

9. Additifs suivant l'une quelconque des revendications précédentes, dans lesquels le groupe hydrocarbyle contient 5 à 20 atomes de carbones.

10. Concentré comprenant un solvant organique oléophile inerte stable bouillant dans l'intervalle de 150 à 400°F (65,5 à 204°C) et 10 à 50% en poids d'un additif suivant l'une quelconque des revendications 1 à 9.

11. Composition de carburant comprenant un carburant hydrocarboné bouillant dans la plage de l'essence et 30 à 10 000 ppm d'un additif suivant l'une quelconque des revendications 1 à 9.

12. Composition d'huile lubrifiante comprenant une huile de viscosité propre à le lubrification et 0,01 à 10% en poids de la composition totale d'un additif suivant l'une quelconque des revendications 1 à 9.